**Europäisches Patentamt**

(19) **European Patent Office**

**Office européen des brevets**

(11) Veröffentlichungsnummer: **0 069 356**
**B1**

(12) # EUROPÄISCHE PATENTSCHRIFT

(45) Veröffentlichungstag der Patentschrift: —
**29.10.86**

(51) Int. Cl.⁴: **G 02 B 6/28**

(21) Anmeldenummer: **82105886.4**

(22) Anmeldetag: **01.07.82**

(54) Bidirektionaler Lichtwellenleiter-Verzweiger und Verfahren zu seiner Herstellung.

(30) Priorität: **03.07.81 DE 3126367**

(43) Veröffentlichungstag der Anmeldung:
**12.01.83 Patentblatt 83/2**

(45) Bekanntmachung des Hinweises auf die Patenterteilung:
**29.10.86 Patentblatt 86/44**

(84) Benannte Vertragsstaaten:
**DE FR GB**

(56) Entgegenhaltungen:
**DE - A - 2 942 318**
**US - A - 3 864 019**
**US - A - 3 883 222**
**US - A - 3 933 410**
**US - A - 3 936 141**
**US - A - 3 936 142**
**US - A - 4 142 877**
**US - A - 4 198 118**
**US - A - 4 243 297**

**DEUXIEME COLLOQUE EUROPEEN SUR LES TRANSMISSIONS PAR FIBRES OPTIQUES, Session XIII: Systems courte distance, 27.-30. September 1976, Seiten 421-427, Paris, FR., D.R. PORTER et al.: "Système de répartition de données à configuration hybride par fibres optiques"**

(73) Patentinhaber: **Siemens Aktiengesellschaft Berlin und München, Wittelsbacherplatz 2, D-8000 München 2 (DE)**

(72) Erfinder: **Witte, Hans-Hermann, Dr.rer.nat., Dipl.-Phys., Hippelstrasse 15, D-8000 München 82 (DE)**

(56) Entgegenhaltungen: (Fortsetzung)
**I.E.E.E. JOURNAL OF QUANTUM ELECTRONICS, Band QE-16, Nr. 2, Februar 1980, Seiten 165-169, New York, USA, YOHJI FUJII et al. "Optical demultiplexer using a silicon echelette grating"**

## Beschreibung

Die vorliegende Erfindung betrifft einen bidirektionalen Lichtwellenleiterverzweiger nach dem Oberbegriff des Patentanspruchs 1 und ein Verfahren zu seiner Herstellung.

Ein bidirektionaler Lichtwellenleiterverzweiger der eingangs genannten Art ist aus der US-A-4 142 877 bekannt (siehe sort insbesondere Fig. 6 und zugehörigen Beschreibungsteil in Spalte 4, Zeilen 9 bis 17). Bei diesem Verzweiger ist das Verbindungselement koaxial zu den Hauptlichtwellenleitern angeordnet und die Zweiglichtwellenleiter, die von der Seite des Verbindungselements abzweigen, bilden mit dem Verbindungselement ein Stück.

Aus der US-A-3 933 410 geht ein bidirektionaler Lichtwellenleiterverzweiger hervor (siehe dort insbesondere Fig. 5 und dazugehörigen Text in Spalte 2, Zeilen 29 bis 36), bei dem ein ganzes Bündel getrennter Hauptlichtwellenleiter durch ein gemeinsames Verbindungsstück verbunden sind, das koaxial zu dem Bündel angeordnet ist und von dem seitlich Zweiglichtwellenleiter abzweigen, die ebenfalls zum Ankoppeln von Zweiglichtwellenleiterbündeln dienen. Die Zweiglichtwellenleiter sind durch ein optisches Verbindungsmittel an den Seitenflächen des Verbindungselements befestigt.

Derartige bidirektionale Lichtwellenleiterverzweiger werden häufig in optischen Datenbussen benötigt.

Aufgabe der vorliegenden Erfindung ist es, einen bidirektionalen Verzweiger der eingangs genannten Art anzugeben, der einfach herzustellen ist und geringe Einfügeverluste aufweist.

Diese Aufgabe wird gemäss dem kennzeichnenden Teil des Patentanspruchs 1 dadurch gelöst, dass das Verbindungsstück seitlich gegen die Hauptlichtwellenleiter versetzt ist, dass an die an das Verbindungselement stossenden, aber seitlich überstehenden Enden der Hauptlichtwellenleiter Zweiglichtwellenleiter stossgekoppelt sind, die zu einem Empfänger führen oder von einem Sender kommen und dass an die an die Enden der Hauptlichtwellenleiter stossenden und seitlich überstehenden Enden des Verbindungselements Zweiglichtwellenleiter stossgekoppelt sind, die von einem Sender kommen oder zu einem Empfänger führen.

Der erfindungsgemässe Verzweiger kann wie der Verzweiger nach der US-A-4 142 877 als Hintereinanderschaltung zweier optischer Viertorkoppler aufgefasst werden.

Bevorzugte und vorteilhafte Ausgestaltungen des erfindungsgemässen Verzweigers gehen aus den Unteransprüchen 2 bis 10 hervor.

Ein vorteilhaftes Verfahren zur Herstellung eines erfindungsgemässen bidirektionalen Lichtwellenleiterverzweigers geht aus dem Anspruch 11 hervor und bevorzugte Ausgestaltungen dieses Verfahrens sind in den Ansprüchen 12 bis 17 angegeben.

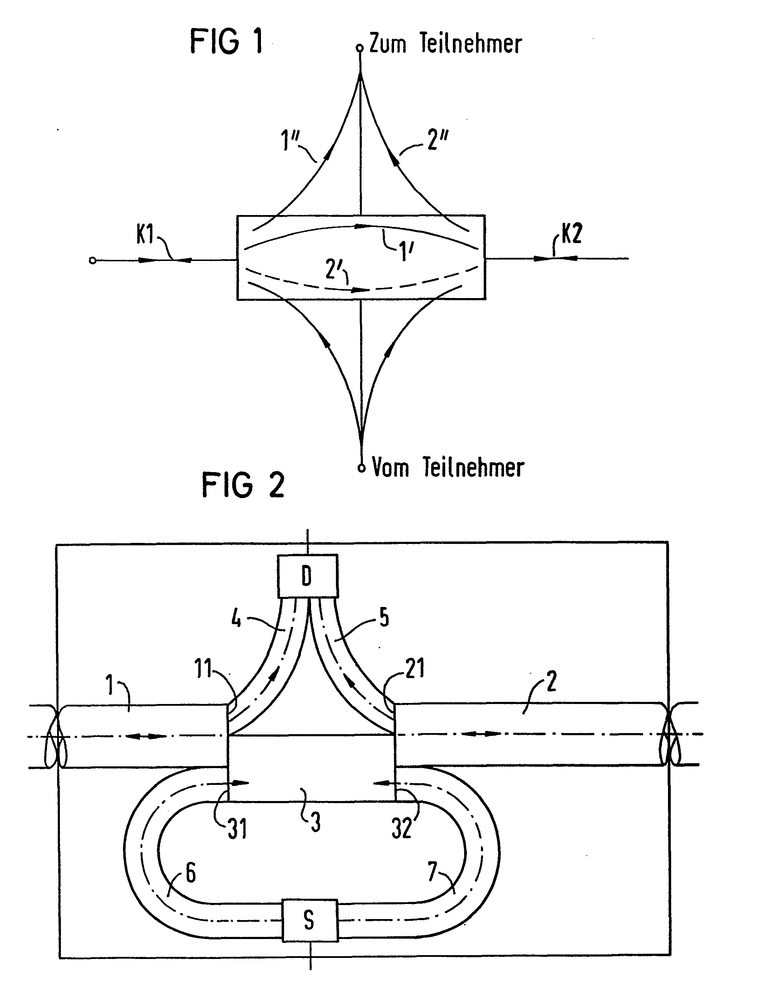

Die Erfindung wird anhand der Figuren in der nun folgenden Beschreibung näher erläutert. Von den Figuren zeigen Fig. 1 in schematischer Darstellung die Funktionsweise eines bidirektionalen Verzweigers, und

Fig. 2 in schematischer Darstellung eine Ausführungsform eines erfindungsgemässen bidirektionalen Verzweigers.

In der Fig. 1 ist die Funktionsweise eines bidirektionalen Verzweigers schematisch dargestellt. Licht, das von links über einen Kanal K1 an den Verzweiger V herangeführt wird, gelangt über einen Lichtweg 1'' teilweise zu einem Teilnehmer und über einen Lichtweg 1' teilweise zu einem Hauptkanal K2, in dem es fortgeführt wird. Entsprechend wird Licht, das von rechts über den Kanal K2 herangeführt wird, aufgeteilt. Ein Teil dieses Lichts gelangt über einen Lichtweg 2'' zum Teilnehmer und der andere Teil gelangt über den Lichtweg 2' zum Kanal K1, in dem er fortgeführt wird. Licht, das von einem Teilnehmer kommt, der diesem Verzweiger zugeordnet ist, gelangt sowohl in den Kanal K1 als auch in den Kanal K2.

In der Fig. 2 ist eine Realisierung eines derartigen bidirektionalen Verzweigers dargestellt. Er besteht aus zwei getrennten Hauptlichtwellenleitern 1 und 2, die durch ein dagegen seitlich versetztes Verbindungselement 3 miteinander verbunden sind. An die an das Verbindungselement 3 stossenden aber seitlich überstehenden Enden 11 und 21 der Hauptlichtwellenleiter 1 und 2 sind zwei Lichtwellenleiter 4 und 5 stossgekoppelt, die zu einem Empfänger D führen, der einem Teilnehmer entspricht. An die an die Enden 11 und 21 der Hauptlichtwellenleiter 1 und 2 stossenden und seitlich überstehenden Enden 31 und 32 des Verzweigerelements sind ebenfalls Lichtwellenleiter 6 und 7 stossgekoppelt, die von einem Sender S kommen, der ebenfalls einem Teilnehmer entspricht.

Durch den Versatz des Verbindungselements 3 in Bezug auf die aus Glasfasern bestehenden Hauptlichtwellenleiter 1 und 2 koppeln die zum Detektor D führenden Glasfasern 4 und 5 mit den Fasern 1 und 2. Über das Verbindungselement 3 wird durch die vom Sender S kommenden Glasfasern 6 und 7 Licht sowohl in die Faser 1 als auch in die Faser 2 gekoppelt. Als Sender kommen LED's als auch LD'S infrage.

Zweckmässigerweise werden die Durchmesser der zum Detektor D führenden bzw. vom Sender S kommenden Fasern kleiner gewählt als die Durchmesser der Hauptfasern 1 und 2.

Das Verbindungselement, das aus einem transparenten verlustarmen Material bestehen soll, kann quaderförmig oder zylindrisch geformt sein. Um die Packungsdichteverluste gering zu halten, sind die Dimensionen des Verbindungselements 3 denen der Faser anzupassen. Der Brechungsindex des Materials des Verbindungselements ist so zu wählen, dass alles Licht im Verbindungselement 3 geführt wird.

Im Prinzip ist die in Figur 2 dargestellte Ausführungsform nichts anderes als die Hintereinanderschaltung zweier Viertorkoppler. Aus diesem Grunde lassen sich alle Viertorkoppler zu einem bidirektionalen Bauelement erweitern. So kann der in Figur 1 dargestellte und durch die Ausführungsform nach Figur 2 realisierte bidirektionale Verzweiger auch durch die Hintereinanderschaltung zweier Viertorkoppler, die nach dem Prinzip des Faserachs-Versatzes oder nach dem Prinzip der teildurchlässigen Spiegel oder nach dem Taper-Prinzip realisiert wird, realisiert werden. Ein Unterschied des gemäss Figur 2 realisierten Versatz-Verzweigers zu den Verzweigern, die über das Fasertaper-Prinzip oder das Prinzip der teildurchlässigen Spiegel realisiert werden, besteht darin, dass bei Versatz-Verzweigern das vom Sender S kommende Licht nicht auch von den zum Detektor D dieses Elements führenden Fasern empfangen wird.

Der in Figur 2 dargestellte Versatz-Verzweiger lässt sich folgendermassen realisieren:

Über die Maskentechnik werden in einem Schritt über beispielsweise das Vorzugsätzen in Silizium sowohl die Führungsnuten für die Aufnahme der Fasern als auch eine Vertiefung für die Aufnahme des Verbindungselements hergestellt.

Das Verbindungselement 3 geeigneter From und Qualität wird in die entsprechende Aussparung gelegt und mit den ebenfalls in ihren Gräben eingelegten Fasern durch einen geeigneten Kleber verklebt. Es braucht dabei die Qualität der Stirnflächen der Fasern nicht besonders gut zu sein, weil ein geeigneter Kleber immer wie eine Immersion wirkt.

Das Verbindungselement kann auch durch Auffüllen der Vertiefung mit geeignetem Kleber hergestellt werden, wobei durch den Andruck über einen Deckel möglichst wenig Kleber über den Rand der Vertiefung gelangen soll. Zweckmässigerweise wird die Siliziumoberfläche der Vertiefung vorher durch thermische Oxidation in Siliziumdioxid verwandelt, um eine verlustärmere Wellenführung zu gewährleisten.

**Patentansprüche**

1. Bidirektionaler Lichtwellenleiterverzweiger, wobei zwei getrennte Hauptlichtwellenleiter (1, 2) durch ein Verbindungselement (3) miteinander verbunden sind, von dem in verschiedenen Richtungen Zweiglichtwellenleiter (4, 5, 6, 7) abzweigen, dadurch gekennzeichnet, dass das Verbindungselement (3) seitlich gegen die Hauptlichtwellenleiter (1, 2) versetzt ist, dass an die an das Verbindungselement (3) stossenden, aber seitlich überstehenden Enden (11, 21) der Hauptlichtwellenleiter (1, 2) Zweiglichtwellenleiter (4, 5) stossgekoppelt sind, die zu einem Empfänger (D) führen oder von einem Sender kommen, und dass an die an die Enden (11, 21) der Hauptlichtwellenleiter (1, 2) stossenden und seitlich überstehenden Enden (31, 32) des Verbindungselements (3) Zweiglichtwellenleiter (6, 7) stossgekoppelt sind, die von einem Sender (S) kommen oder zu einem Empfänger führen.

2. Verzweiger nach Anspruch 1, dadurch gekennzeichnet, dass der Durchmesser eines Zweiglichtwellenleiters (4, 5, 6, 7) kleiner ist als der Durchmesser eines Hauptlichtwellenleiters (1, 2).

3. Verzweiger nach Anspruch 1 oder 2, dadurch gekennzeichnet, dass das Verbindungselement (3) zylinderförmig ausgebildet ist.

4. Verzweiger nach Anspruch 3, dadurch gekennzeichnet, dass das Verbindungselement (3) kreiszylindrisch oder quaderförmig ausgebildet ist.

5. Verzweiger nach einem der Ansprüche 1 bis 4, dadurch gekennzeichnet, dass das Verbindungselement (3) aus einem transparenten, verlustarmen Material besteht.

6. Verzweiger nach einem der Ansprüche 1 bis 5, dadurch gekennzeichnet, dass zur Vermeidung von Packungsdichteverlusten die Dimensionen des Verbindungselements (3) dienende Lichtwellenleiter (1, 2, 4, 5, 6, 7) angepasst sind.

7. Verzweiger nach einem der Ansprüche 1 bis 6, dadurch gekennzeichnet, dass der Brechungsindex des Materials des Verbindungselementes (3) so gewählt ist, dass alles Licht in dem Verbindungselement geführt wird.

8. Verzweiger nach einem der Ansprüche 1 bis 7, dadurch gekennzeichnet, dass die Lichtwellenleiter (1, 2, 4, 5, 6, 7) aus Glasfasern bestehen.

9. Verzweiger nach einem der Ansprüche 1 bis 8, dadurch gekennzeichnet, dass ein Empfänger (D) aus einem lichtempfindlichen Detektor besteht.

10. Verzweiger nach einem der Ansprüche 1 bis 9, dadurch gekennzeichnet, dass ein Sender (S) aus einer lichtemittierenden Diode (LED) oder aus einer Laserdiode (LD) besteht.

11. Verfahren zur Herstellung eines Verzweigers nach einem der Ansprüche 1 bis 10, dadurch gekennzeichnet, dass mittels einer Maskentechnik in einem Schritt Führungsnuten für die Aufnahme der Lichtwellenleiter (1, 2, 4, 5, 6, 7) als auch eine Vertiefung für die Aufnahme des Verbindungselements (3) hergestellt werden, dass in die Führungsnuten die Lichtwellenleiter (1, 2, 4, 5, 6, 7) eingelegt und mit dem in die Vertiefung eingebrachten Verbindungselement (3) verbunden werden.

12. Verfahren nach Anspruch 11, dadurch gekennzeichnet, dass das Verbindungselement (3) in die Vertiefung gelegt und mit den in die Führungsnuten eingelegten Lichtwellenleitern (1, 2, 4, 5, 6, 7) verklebt wird.

13. Verfahren nach Anspruch 12, dadurch gekennzeichnet, dass der Kleber so gewählt wird, dass er wie eine Immersion wirkt.

14. Verfahren nach Anspruch 11, dadurch gekennzeichnet, dass das Verbindungselement (3) durch Auffüllen der Vertiefung mit einem Kleber hergestellt wird.

15. Verfahren nach Anspruch 14, dadurch gekennzeichnet, dass die mit Kleber aufgefüllte Vertiefung mit einem Deckkörper abgedeckt wird.

16. Verfahren nach einem der Ansprüche 11 bis 15, dadurch gekennzeichnet, dass die Führungsnuten für die Lichtwellenleiter (1, 2, 4, 5, 6, 7) und die Vertiefung für das Verbindungselement (3) mittels Vorzugsätzen (anisotropes Ätzen) in Silizium erzeugt werden.

17. Verfahren nach Anspruch 14 oder 15 und Anspruch 16, dadurch gekennzeichnet, dass die Siliziumoberfläche in der Vertiefung vor dem Einbringen des Klebers durch thermische Oxidation in SiO₂ verwandelt wird.

## Claims

1. A bidirectional optical waveguide divider, wherein two separate main optical waveguides (1, 2) are connected to one another by means of a connecting element (3), from which optical waveguides (4, 5, 6, 7) branch in different directions, characterised in that the connecting element (3) is laterally offset with respect to the main optical waveguides (1, 2), that branch optical waveguides (4, 5) to a receiver (D) or from a transmitter, are butt-jointed to the ends (11, 21) of the main optical waveguides (1, 2), which ends abut the offset connecting element (3) laterally, and that branch optical waveguides (6, 7) from a transmitter (S) or to a receiver are butt-jointed to the laterally protruding ends (31, 32) of the connecting element (3) which abut the ends (11, 21) of the main optical waveguides (1, 2).

2. A divider as claimed in Claim 1, characterised in that the diameter of a branch optical waveguide (4, 5, 6, 7) is smaller than the diameter of a main optical waveguide (1, 2).

3. A divider as claimed in Claim 1 or 2, characterised in that the connecting element (3) is cylindrical.

4. A divider as claimed in Claim 3, characterised in that the connecting element (3) is shaped like a circular cylinder or a parallelepiped.

5. A divider as claimed in one of Claims 1 to 4, characterised in that the connecting element (3) consists of a transparent, low-loss material.

6. A divider as claimed in one of Claims 1 to 5, characterised in that in order to avoid losses of packing density the dimensions of the connecting element (3) are matched to those of the optical waveguides (1, 2, 4, 5, 6, 7).

7. A divider as claimed in one of Claims 1 to 6, characterised in that the index of refraction of the material for the connecting element (3) is selected to be such that all light is carried in the connecting element.

8. A divider as claimed in one of Claims 1 to 7, characterised in that the optical waveguides (1, 2, 4, 5, 6, 7) consist of glass fibres.

9. A divider as claimed in one of Claims 1 to 8, characterised in that a receiver (D) consists of a light-sensitive detector.

10. A divider as claimed in one of Claims 1 to 9, characterised in that a transmitter (S) consists of a light-emitting diode (LED) or a laser diode (LD).

11. A process for the production of a divider as claimed in one of Claims 1 to 10, characterised in that guide grooves for accommodating the optical waveguides (1, 2, 4, 5, 6, 7) and a recess for accommodating the connecting element (3) are produced by means of mask technology in one step, and the optical waveguides (1, 2, 4, 5, 6, 7) are then placed into the guide grooves and connected to the connecting element (3) which is inserted into the recess.

12. A process as claimed in Claim 11, characterised in that the connecting element (3) is inserted into the recess and adhesively fixed to the optical waveguides (1, 2, 4, 5, 6, 7) placed in the guide grooves.

13. A process as claimed in Claim 12, characterised in that the adhesive is selected to be such that it has the effect of an immersion.

14. A process as claimed in Claim 11, characterised in that the connecting element (3) is produced by filling the recess with an adhesive.

15. A process as claimed in Claim 14, characterised in that the recess filled with adhesive is covered with a covering body.

16. A process as claimed in one of Claims 11 to 15, characterised in that the guide grooves for the optical waveguides (1, 2, 4, 5, 6, 7) and the recess for the connecting element (3) are produced by preferential etching (anisotropic etching) in silicon.

17. A process as claimed in Claim 14 or 15 and Claim 16, characterised in that the silicon surface in the recess is changed into SiO₂ by thermal oxidation prior to the insertion of the adhesive.

## Revendications

1. Aiguillage bidirectionnel de guides d'ondes optiques, dans lequel deux guides d'ondes optiques principaux séparés (1, 2) sont reliés entre eux par un organe de jonction (3) d'où partent des guides d'ondes optiques de dérivation, (5, 6, 7) dans différentes directions, caractérisé par le fait que l'organe de jonction (3) est décalé latéralement par rapport aux guides d'ondes optiques principaux (1, 2), que des guides d'ondes optiques de dérivation (4, 5) qui aboutissent à un récepteur (T) ou arrivent d'un émetteur, sont accouplés en aboutement aux extrémités (11, 21) des guides d'ondes optiques principaux (1, 2), qui sont en aboutement avec l'organe de jonction (3), mais font saillie latéralement, et que des guides d'ondes optiques de dérivation (6, 7), qui arrivent d'un émetteur (S) ou aboutissent à un récepteur, sont accouplés en aboutement avec les extrémités (31, 32) de l'organe de jonction (3), qui sont en aboutement avec les extrémités (11, 21) des guides d'ondes potiques principaux (1, 2) et font saillie latéralement.

2. Aiguillage suivant la revendication 1, caractérisé par le fait que le diamètre d'un guide d'ondes optiques de dérivation (4, 5, 6, 7) est inférieur au diamètre d'un guide d'ondes optiques principal (1, 2).

3. Aiguillage suivant la revendication 1 ou 2, caractérisé par le fait que l'élément de jonction (3) est réalisé avec une forme cylindrique.

4. Aiguillage suivant la revendication 3, caractérisé par le fait que l'organe de jonction (3) est réalisé avec une forme d'un cylindre circulaire ou d'un parallélépipède.

5. Aiguillage suivant l'une des revendications 1 à 4, caractérisé par le fait que l'organe de jonction (3) est constitué en un matériau transparent présentant peu de pertes.

6. Aiguillage suivant l'une des revendications 1 à 5, caractérisé par le fait qu'afin d'éviter des pertes d'intensité d'intégration, les dimensions de l'organe de jonction (3) sont adaptées aux dimensions des guides d'ondes optiques (1, 2, 4, 5, 6, 7).

7. Aiguillage suivant l'une des revendications 1 à 6, caractérisé par le fait que l'indice de réfraction du matériau de l'organe de jonction (3) est choisi de telle sorte que toute la lumière est guidé dans l'organe de jonction.

8. Aiguillage suivant l'une des revendications 1 à 7, caractérisé par le fait que les guides d'ondes optiques (1, 2, 4, 5, 6, 7) sont constitués par des fibres de verre.

9. Aiguillage suivant l'une des revendications 1 à 8, caractérisé par le fait qu'un récepteur (D) est constitué par un détecteur photosensible.

10. Aiguillage suivant l'une des revendications 1 à 9, caractérisé par le fait qu'un émetteur (S) est constitué par une diode photoémissive (LED) ou par une diode laser (LD).

11. Procédé pour fabriquer un aiguillage suivant l'une des revendications 1 à 10, caractérisé par le fait qu'au moyen d'une technique de masquage on réalise, en une phase opératoire, des rainures de guidage servant à recevoir les guides d'ondes optiques (1, 2, 4, 5, 6, 7) ainsi qu'un renfoncement servant à recevoir l'organe de jonction (3), qu'on insère les guides d'ondes optiques (1, 2, 4, 5, 6, 7) dans les rainures de guidage et qu'on les relie à l'organe de jonction (3) inséré dans le renfoncement.

12. Procédé suivant la revendication 11, caractérisé par le fait qu'on insère l'organe de jonction (3) dans le renfoncement et qu'on le colle aux guides d'ondes optiques (1, 2, 4, 5, 6, 7) inséré dans les rainures de guidage.

13. Procédé suivant la revendication 12, caractérisé par le fait que la colle est choisie de manière à agir comme un milieu d'immersion.

14. Procédé suivant la revendication 11, caractérisé par le fait qu'on réalise l'organe de jonction (3) en remplissant le renfoncement avec une colle.

15. Procédé suivant la revendication 14, caractérisé par le fait qu'on recouvre le renfoncement rempli de colle avec un organe formant couvercle.

16. Procédé suivant l'une des revendications 11 à 15, caractérisé par le fait qu'on réalise les rainures de guidage pour les guides d'ondes optiques (1, 2, 4, 5, 6, 7) et le renfoncement pour l'organe de jonction (3) au moyen d'une attaque chimique à direction préférentielle (attaque chimique anisotrope) dans du silicium.

17. Procédé suivant la revendication 14 ou 15, et la revendication 16, caractérisé par le fait qu'avant l'introduction de la colle, on transforme la surface du silicium située dans le renfoncement par oxydation thermique en du $SiO_2$.

FIG 1

FIG 2